# EUROPEAN PATENT SPECIFICATION

(11) **EP 4 690 084 B1**
(45) Date of publication and mention of the grant of the patent: **03.06.2026**
(21) Application number: 24715630.0
(22) Date of filing: 04.04.2024
(51) Int. Cl.: G06Q 50/04, G06Q 10/06

(54) **METHODS AND DEVICES FOR MANUFACTURING A PLURALITY OF OPTICAL LENSES**
VERFAHREN UND VORRICHTUNGEN ZUR HERSTELLUNG EINER VIELZAHL VON OPTISCHEN LINSEN
PROCÉDÉS ET DISPOSITIFS DE FABRICATION D'UNE PLURALITÉ DE LENTILLES OPTIQUES

(30) Priority: 05.04.2023 EP 23166719
(43) Date of publication of application: 11.02.2026
(73) Proprietor: Carl Zeiss Vision International GmbH, 73430 Aalen (DE)
(72) Inventor: SCHLUMP, Heiko, 73430 Aalen (DE); PFISTNER, Raimund Daniel, 73430 Aalen (DE); DAMBACHER, Herbert, 73430 Aalen (DE); LEHR, Eduard, 73430 Aalen (DE)
(74) Representative: Altmann Stößel Dick Patentanwälte PartG mbB
(86) International application number: PCT/EP2024/059209
(87) International publication number: WO 2024/208979

(56) References cited:
- EP-A1- 2 590 114
- WO-A1-2017/102003
- -: "Wikipedia - OPC Unified Architecture", 21 March 2023 (2023-03-21), XP093073555, Retrieved from the Internet <URL:https://en.wikipedia.org/w/index.php?title=OPC_Unified_Architecture&oldid=1145886406> [retrieved on 20230814]

## Description

### Field of the invention

The present invention relates to a method and a device for manufacturing a plurality of optical lenses, a method and a device for providing data sets for the plurality of the optical lenses to at least one manufacturing machine configured for performing at least one manufacturing step in manufacturing the plurality of the optical lenses, and a corresponding computer program.

### Related art

Known methods and devices for manufacturing a plurality of optical lenses, generally, operate in the following manner. Each optical lens having an identifier is provided for undergoing one or more manufacturing steps which are, typically, performed by using one or more manufacturing machines that are configured for performing the corresponding manufacturing step(s). For this purpose, a data set for each optical lens from the plurality of the optical lenses is generated, wherein the data set for a particular optical lens comprises:
- a first item of information related to the identifier for the particular optical lens; and
- a second item of information related to:
   ∘ the manufacturing machine(s) configured for performing the manufacturing step(s) at the particular optical lens; and/or
   ∘ the manufacturing step(s) to be performed at the particular optical lens by using the manufacturing machine(s).

Thereafter, the plurality of the optical lenses is routed to a manufacturing machine(s) designated for performing the manufacturing step(s), preferably by using at least one transport element. As soon as a particular manufacturing machine receives the particular optical lens, it identifies the first item of information from the identifier for the particular optical lens. By using the first item of information, the particular manufacturing machine requests the complete data set for the particular optical lens in order to be able to manufacture the optical lens depending on the second item of information.

WO 2017/102003 A1 discloses systems, computer-implemented methods, and computer-readable storage media that execute, are configured to execute, or store instructions that enable the modification of optical manufacturing data. As one example, specific embodiments disclosed herein include a computer-implemented method for modifying optical manufacturing data. In one embodiment, the method includes the steps of receiving the optical manufacturing data associated with an optical job and modifying the optical manufacturing data using manufacturing logic to generate modified optical manufacturing data. The modified optical manufacturing data is then used in the manufacturing process of the optical job.

EP 2 590 114 A1 discloses a supply of an optical lens adapted to a wearer, comprising the steps of: a) receiving, directly or indirectly via a manufacturing side, from a first networked computer entity located at a lens ordering side, a first set of data, the first set of data comprising at least wearer's data and in particular wearer's prescription data, b) sending a second set of data comprising at least an optical lens design information and the wearer's prescription data to a second networked computer entity located at a lens designing side, and receiving from the second networked computer entity a third set of data comprising at least optical lens data calculated from the second set, and c) sending at least to a third networked computer entity, at a lens manufacturing side, a fourth set of data comprising at least a part of the optical lens data, the at least optical lens data of the fourth set of data being at least partially modified by a masking function.

WO 2022/018212 A1 discloses a computer-implemented method for generating data in order to produce at least one spectacle lens adapted to a spectacle frame of a pair of spectacles, to a computer program which is configured to carry out the computer-implemented method, to a method for producing a pair of spectacles, and to a system for producing at least one spectacle lens adapted to a spectacle frame of a pair of spectacles. The computer-implemented method comprises the following steps: (i) providing at least a first data set stored on a storage medium, the first data set comprising at least the following data values: at least one centering value; and a three-dimensional model of the spectacle frame; (ii) creating, using the at least a first data set, at least a second data set stored on a storage medium, the second data set comprising at least the following data values: at least one geometric value of at least one surface of the at least one spectacle lens; (iii) creating, in order to produce the at least one spectacle lens from at least one spectacle lens blank and in order to grind in and/or introduce the at least one spectacle lens into the spectacle frame using the at least a first data set and the at least a second data set, at least a third data set stored on a storage medium, wherein the data values of each data set have a spatial relationship with respect to each other such that the data values of each data set are consistently specified in relation to a particular coordinate system, wherein all data values of each data set are specified in a coordinate system common to all data sets, or are transformed from the common coordinate system or into the common coordinate system.

However, the known methods and devices for manufacturing a plurality of optical lenses exhibit various disadvantages. Especially, the requirement that each manufacturing machine has to request the complete data set for each optical lens each time from a manufacturing executing system after it has retrieved the first item of information from the identifier for the particular optical lens considerably retards the manufacturing process of the plurality of the optical lenses. In particular, the retarding of the manufacturing process is caused by delays due to the plurality of requests that have to be processed the from the manufacturing executing system and by each manufacturing machine as well as by an unbalanced work load between various manufacturing machines.

A further disadvantage arises when text messages according to a prior art communication protocol are used for data exchange between the manufacturing executing system and the manufacturing machines. Herein, it is particularly disadvantageous that the each message is composed of compound text strings each comprising consecutive individual values that have been converted into text and separated by a specific separator, such as a semicolon or an equal sign. For writing a particular item of information, the manufacturing executing system is required to consecutively transform the individual values into a particular compound text string by using the specific separator, while for reading the particular item of information, each manufacturing machine has to convert the particular compound text string into the individual values by using the specific separator.

### Problem to be solved

It is therefore an objective of the present invention, in particular with regard to the disclosure of at least one of WO 2017/102003 A1 or EP 2 590 114 A1, to provide a method and a device for manufacturing a plurality of optical lenses, a method and a device for providing data sets for the plurality of the optical lenses to at least one manufacturing machine configured for performing at least one manufacturing step in manufacturing the plurality of the optical lenses, and a corresponding computer program, which at least partially overcome the above-mentioned problems of the state of the art.

It is a particular objective of the present invention to provide a method and a device for manufacturing a plurality of optical lenses which can be performed in an easy and direct manner, whereby at least one retarding step that, currently, arises during the manufacturing process has been omitted.

### Summary of the invention

This problem is solved by a method and a device for manufacturing a plurality of optical lenses, a method and a device for providing data sets for the plurality of the optical lenses to at least one manufacturing machine configured for performing at least one manufacturing step in manufacturing the plurality of the optical lenses, and a corresponding computer program having the features of the independent claims. Preferred embodiments, which may be implemented in an isolated fashion or in any arbitrary combination, are listed in the dependent claims or throughout the following description.

In a first aspect, the present invention relates to a method for providing data sets for the plurality of the optical lenses to at least one manufacturing machine configured for performing at least one manufacturing step in manufacturing the plurality of the optical lenses. The method comprises the following steps a) to c):
a) generating data sets for a plurality of optical lenses, wherein the data set for at least one particular optical lens at least comprises:
   - a first item of information related to an identifier for the at least one particular optical lens; and
   - a second item of information related to at least one of:
      ∘ at least one manufacturing machine configured for performing at least one manufacturing step at the at least one particular optical lens; or
      ∘ the at least one manufacturing step to be performed at the at least one particular optical lens by using the at least one manufacturing machine;
c) transmitting the data set for each optical lens to at least one server configured for operating the at least one manufacturing machine designated for performing the at least one manufacturing step; and
b) providing the data set for the at least one particular optical lens to be retrieved by the at least one manufacturing machine for manufacturing the at least one particular optical lens.

Herein, the indicated steps may, preferably, be performed in the above-indicated order, commencing with method step a), followed by method step c), and finishing with method step b). In a particularly preferred embodiment, the transmitting of the data set for each optical lens according to method step c) to the at least one server may, preferably, be performed prior to retrieving the data set for a particular optical lens by the at least one manufacturing machine for manufacturing the at least one optical lens according to method step b). In this particularly preferred embodiment, the data set for the particular optical lens may, especially, be stored in the at least one server at least until it may be requested by the at least one manufacturing machine according to method step b). Further, any or all of the indicated steps may be repeated several times and/or preformed concurrently in part, especially for at least one further particular optical lens from the plurality of the optical lenses.

In a particularly preferred embodiment, at least one method step in the methods according to the present invention can be a computer-implemented method. As generally used, the term "computer-implemented method" refers to a method which involves a programmable apparatus, in particular, a computer, a computer network, or a readable medium carrying a program, whereby at least one of the steps of the method, specifically at least one of the method steps a), b), and c), may be performed by using at least one computer program. Alternatively, the at least one computer program may be accessible by an apparatus which may be adapted for performing the method via a network, such as via an in-house network, a cloud server, or via internet. With particular regard to the present invention, the present method can, thus, being performed on a programmable apparatus which is configured for this purpose, such as by providing a computer program being configured for such a purpose.

As generally used, the term "optical lens" refers to a lens body which comprises a particular shape that is configured for a purpose of determining and/or altering a vision of a wearer of the optical lens. Based on standard ISO 13666:2019, also herein referred to as "Standard", 3.5.2, the term "spectacle lens" refers to a particular kind of optical lens which is used for determining and/or altering the vision of the wearer of the optical lens, wherein the optical lens is carried in front of the eye of the wearer, thereby avoiding a direct contact with the eye of a wearer. Instead of the term "wearer", a different term, such as "person", "subject", or "user", may also be applicable. In general, the optical lens may be a unifocal lens having a single focal point; may have at least two distinguishable focal points, such a bifocal lens, a multifocal lens, or a variofocal lens; or may be a progressive lens which comprises a transition between differently focusing portions of the optical lens, which, according to the Standard, 3.16, are, typically, distributed over the surface of the spectacle lens in a fashion that a so-denominated "far portion" is designated for providing distance power to be used for altering a so-denoted "far vision", while a so-denominated "near portion" is designated for providing near power to be used for altering a so-denoted "near vision". However, further kinds of optical lenses are conceivable. As used herein, the term "optical lens" comprises the optical lens at any manufacturing stage, in particular any manufacturing stage as described in the Standard, 3.8. By way of example, the optical lens may, thus, comprise a precursor of the optical lens, irrespective of a manufacturing stage of the precursor, particularly a semi-finished lens blank; or a finished optical lens being ready for receiving at least one additional processing step, particularly selected from a finishing step or a refining step, such as a coating step. However, further manufacturing stages of the optical lens are conceivable.

As further generally used, the term "manufacturing" refers to a process of providing on optical lens whose particular is configured for the intended purpose of determining and/or altering the vision of a wearer of the optical lens. Herein, the manufacturing process comprises a plurality of individual manufacturing steps, wherein each "manufacturing step" refers to at least one treatment of the at least one optical lens. In general, geometric values of one or both surfaces of a particular optical lens may be used as input data for the at least one manufacturing step in a process of producing the particular optical lens from a lens blank. For this purpose, at least one manufacturing machine is used. As generally, used the term "manufacturing machine" refers to a tool or a device which is configured for performing the at least one manufacturing step. By way of example, the at least one manufacturing step may be selected from grinding, polishing, coating, engraving, taping, inspecting, or measuring one or both surfaces of the optical lens. Alternatively or in addition, the at least one manufacturing step may be selected from washing, blocking, or deblocking the optical lens. As a further alternative, the at least one manufacturing step may comprise a step of adapting the optical lens to a frame, in particular measuring at least one property of the frame, preferably a geometrical contour for cutting and edging; or fitting the optical lens to the frame. However, providing at least one further manufacturing machine that may be configured for performing at least one further manufacturing step may also be feasible.

In order to enable the at least one manufacturing machine to perform that kind of task for which the at least one manufacturing machine is configured to, the at least one manufacturing machine uses a data set of each particular optical lens. As used herein, the term "data set" refers to at least one item of information which is related to at least one particular optical lens and which comprises information to be used for at least one manufacturing step in manufacturing the at least one particular optical lens.

For a purpose of a data exchange between a manufacturing executing system as described below in more detail, the at least one manufacturing machine, the at least one transport element and, optionally, at least one further apparatus, a communication protocol is used. According to prior art communication protocols, each data set is provided as a text message, wherein each compound text string comprises consecutive individual values that have been converted into text and separated by a specific separator, such as a semicolon or an equal sign. A typical common prior art communication protocol that uses text messages of this kind is "Data Communication Standard provided by The Vision Council", also abbreviated to "DCS", about which further information can be found at https://thevisioncouncil.org/ members/standards-communication.

In contrast hereto, the present invention uses, as particularly preferred, a communication protocol which is based on OPC Unified Architecture (OPC UA). As generally used, "OPC", which today refers to "Open Platform Communications'" is an interoperability standard for a secure and reliable data exchange in industrial automation space, ensuring a seamless flow of information among devices from multiple vendors. Further, "OPC Unified Architecture", abbreviated to "OPC UA", refers to a platform providing an independent service-oriented architecture that integrates all functionality of individual OPC specifications into a multilayered approach having extensible framework. For further details, reference can be made to the documents under https://reference.opcfoundation.org/

In accordance with the present invention, each item of information which is transmitted, as particularly preferred by using OPC UA, comprises at least one variable, wherein a plurality of variables is transmitted as serialized individual variables; generating a compound text string is no longer required. For writing a particular item of information, the manufacturing executing system is no longer required to transform the individual values into compound text strings by using a specific separator. Similarly, for reading the particular item of information, the manufacturing machine has no longer to convert the compound text strings into the individual values by using the specific separator. In particular, each individual variable comprises a name and a content, wherein the name and a content are individually readable. As generally used, the term "variable" refers to an item having a name and a content, wherein the name is used to individually address the variable, and wherein the content comprises at least one piece of information that is expressed as a value, wherein the value is of a data type, particularly selected from a bit, an integer value, a float value, an alphanumeric value, or a text string, or of an object comprising at least two of the data types. As used herein, the term "individual" refers to a property of a plurality of variables which are provided as distinguishable items in that each item can be addressed independently from the other items comprised by the plurality of variables. As further used herein, the term "serialized" refers to a further property of a plurality of variables which are transmitted as distinguishable items in a consecutive manner.

By separating the name and the content of each individual variable, the name of each variable can independently be used from the content it refers to. While the name of each variable is fixed during an execution of a related computer program, the value of each variable can be maintained or altered during a course of the execution of the related computer program. By way of example, the value of a variable can be altered following an external demand that may be provided, especially in order to correct an error related to the particular optical lens. As a further example, the value of a variable can be altered following a notification by at least one sensor element, especially in order to ensure a correct application of a substance, such as a coating to the particular optical lens. However, further examples may also be conceivable.

According to method step a), data sets for a plurality of optical lenses are generated. As used herein, the phrase "generating" or any grammatical variation thereof refers to a process of assembling various items of information into a single data set to be used for further processing, such as for transmitting to a further location. For a definition of the term "data set", reference can be made to the description above. With particular regard to the present invention, a manufacturing executing system may, especially, be used for performing method step a). As generally used, the term "manufacturing executing system" refers to a first device which is configured for controlling and monitoring at least one second device. For this purpose, the manufacturing executing system may be or comprise a programmable apparatus, particularly selected from an application-specific integrated circuit (ASIC), or a digital processing device, in particular at least one of a digital signal processor (DSP), a field programmable gate array (FPGA), a microcontroller, a PLC (Programmable Logic Controller), a microcomputer, a computer, or an electronic communication unit, specifically a smartphone, a tablet, a personal digital assistant, or a laptop. Further components may be feasible, in particular at least one of a data acquisition unit, a preprocessing unit, or a data storage unit. The manufacturing executing system may, preferably, be configured for performing at least one computer program, especially at least one line of a computer program configured for providing data sets for a plurality of the optical lenses to at least one manufacturing machine, wherein the processing of the data may be performed in at least one of a consecutive or a parallel fashion. In addition to generate the data sets for a plurality of optical lenses according to method step a), the manufacturing executing system may also be configured for performing various at least one further method step as described below in more detail.

Further according to method step a), the data set for the at least one particular optical lens comprises a first item of information. Herein, the first item of information is related to an identifier for the at least one particular optical lens. As generally used, the term "identifier" for at least one particular object refers to a particular item of information by which the at least one particular object is distinguishable from at least one further object, especially from the same kind of objects. Herein, the identifier may be used permanently or over a period of time. Accordingly, the identifier is used herein for enabling a distinction of at least one particular optical lens from at least one further optical lens that may be comprised by the same plurality of the optical lenses, typically, denoted by the term "batch". In a particular embodiment, the identifier may refer to a particular batch of optical lenses. By way of example, the identifier may, especially, be selected from a permanent mark or a non-permanent mark, which has previously been placed on a portion of the particular optical lens. For this purpose, the identifier may, preferably, be or comprise a barcode, wherein the term "barcode" refers to a machine-readable representation of data, in particular by using a standard barcode, especially selected from a linear code, a Data Matrix barcode, or a QR code. As a further preferred example, the identifier may, however, be placed on a carrier, such as a tray, which is configured to carry at least one optical lens, in particular a batch of optical lenses, wherein a position of each optical lens and an orientation of each surface of each optical lens within the carrier may, further, be known. In this example, the identifier may comprise an RFID chip or tag being applied or attached to the respective carrier, wherein the identifier may, especially, correspond to an order number related to the optical lens. As generally used, the term "RFID" refers to a so-denoted "radio-frequency identification", which uses an electromagnetic field to automatically identify and track at least one tag being applied or attached to at least one object. However, using a further kind of identifier may also be conceivable.

Further according to method step a), the data set for the at least one particular optical lens comprises a second item of information. Accordingly, the second item of information may be related to the at least one manufacturing step to be performed at the at least one particular optical lens by using the at least one manufacturing machine. By way of example, the second item of information may comprise at last one of a value for or a duration of force to be exerted on a particular surface of the particular optical lens, wherein the force may be used for grinding the particular surface of the particular optical lens. As a further example, the second item of information may comprise at last one of a substance to be applied or a duration of appliance to a particular surface of the particular optical lens, wherein the substance may be used for coating the particular surface of the particular optical lens. However, using another manufacturing step may also be conceivable.

Alternatively or in addition, the second item of information may be related to the at least one manufacturing machine which is configured for performing at least one manufacturing step at the at least one particular optical lens. According to this embodiment, the second item of information may indicate a particular manufacturing machine, which is configured for performing a single task in a predefined manner. By way of example, the particular manufacturing machine may be configured for turning a particular optical lens always according to a predefined value, such as about 180°, along a particular axis. As an alternative, the particular manufacturing machine may be configured for performing a task in a manner that at least one sensor element may be configured for reporting to the particular manufacturing machine at least one status value related to the manufacturing step. For definitions for the terms "sensor element" and "status value", reference can be made to the description below. By way of example, the particular manufacturing machine may be configured for applying a coating having a predefined property to the particular optical lens, wherein a correct application of the coating may be monitored by the at least one sensor element, which may be configured for monitoring the predefined property. However, using further alternatives may also be conceivable.

Still further according to method step a), the data set for the at least one particular optical lens may comprise at least one further item of information. By way of example, the at least one further item of information may comprise data, in particular nominal data and/or effective data, which may be related to at least one refractive value related to the at least one particular spectacle lens, wherein the at least one refractive value may comprise at least one value for a sphere, a cylinder, and a cylinder axis, and optionally, at least one value for a prism, a prism base, and an addition of the spectacle lens.

According to method step b), the data set for the at least one particular optical lens is provided in order to be retrieved by the at least one manufacturing machine for manufacturing the at least one particular optical lens. As generally used, the term "providing" or any grammatical variation thereof refers to a process of making at least one item available to at least one a person, a machine, or a subsequent process. Accordingly, the data set for the at least one particular optical lens is made available in a manner that it can be retrieved by the at least one manufacturing machine upon demand. For this purpose, the manufacturing executing system as described elsewhere herein may, preferably, be used. As further generally used, the term "retrieving" or any grammatical variation thereof refers to a process of acquiring at least one item for any purpose. Accordingly, the at least one manufacturing machine acquires the data set for the at least one particular optical lens for a purpose of performing at least one manufacturing step at the at least one particular optical lens.

In accordance with the present invention, the data set for the at least one particular optical lens is made available the at least one manufacturing machine in a manner according to method step c). Accordingly, the data set for each optical lens is transmitted to at least one server, wherein the at least one server is configured for operating the at least one manufacturing machine which is designated for performing the at least one manufacturing step. As generally used, the term "transmitting" or any grammatical variation thereof refers to a process of transferring at least one item from a first location to a second location. Whereas a particular manufacturing machine uses the first item of information to directly request at least the second item of information from the manufacturing executing system to be provided for manufacturing the at least one optical lens depending on the second item of information, the manufacturing executing system according to the present invention transmits the data set to at least one server. As used herein, the term "server" refers to a programmable device comparable to the manufacturing executing system as described above in more detail, wherein, however, each server may, preferably, be assigned to a particular manufacturing machine and/or may be comprised by a particular manufacturing machine, wherein the particular manufacturing machine is operated by the particular server. As an alternative, at least two individual manufacturing machines may share a common server. As a further alternative, a particular manufacturing machine may have at least two individual servers, especially being assigned to at least two individual portions of the particular manufacturing machine.

In this fashion, a definite assignment can be provided between each particular server and each particular manufacturing machine, which facilitates the exchange of data between them. This definite assignment may be particular advantageous since it allows, firstly, the manufacturing executing system to transmit the data sets to the particular manufacturing machine in advance, further, the particular server to store a definite number of tasks that are expected to be performed in near future, and, still further, the particular manufacturing machine to retrieve the required data set just in time without queuing for placing a direct request at the manufacturing executing system. As a result thereof, the manufacturing process can, considerably, be accelerated by using a definite procedure for processing the manufacturing steps that are applied within a definite arrangement of the device for manufacturing the plurality of the optical lenses, wherein the definite arrangement, advantageously, exhibits short and concise links.

As a result of this distinction, the manufacturing executing system according to the present invention already distributes the data set comprising both the first item of information and the second item of information to the particular server before the data set for the at least one particular optical lens may be retrieved by the particular manufacturing machine to be used for manufacturing the at least one optical lens according to method step b). For this purpose, the data set for the at least one particular optical lens may, preferably, be stored in the particular server at least for a period of time until it may be requested by the particular manufacturing machine according to method step b). In this manner, the at least one manufacturing machine may be capable of retrieving the data set for the at least one particular optical lens from the particular server according to method step b) before it may perform the at least one manufacturing step according to method step g) at the at least one particular optical lens as described below in more detail.

In a particularly preferred embodiment, the server may comprise a cache which is configured for this purpose by being capable of storing a predefined number of data sets. As generally used, the term "cache" refers to a buffer being comprised by the server and/or accessible by the server, which is configured for storing a predefined number of items, wherein the stored items can, subsequently, be retrieved from the cache upon demand by using a particular request. Specifically, the cache may, subsequently, be filled with consecutive data sets. In an event in which the cache may already comprise the predefined number of data sets, a first data set which has been, firstly, stored in the cache may be overwritten by a further data set. In this manner, the cache can be maintained small and may be largely devoid of redundant items.

In a further aspect, the present invention relates to a method for manufacturing a plurality of optical lenses. The method comprises the following steps:
d) providing a plurality of optical lenses, wherein each optical lens has an identifier, wherein each optical lens is subject to undergo at least one manufacturing step being performed by at least one manufacturing machine configured for performing the at least one manufacturing step;
a) generating data sets for the plurality of the optical lenses, wherein the data set for at least one particular optical lens at least comprises:
   - a first item of information related to the identifier for the at least one particular optical lens; and
   - a second item of information related to at least one of:
      ∘ the at least one manufacturing machine configured for performing the at least one manufacturing step at the at least one particular optical lens; or
      ∘ the at least one manufacturing step to be performed at the at least one particular optical lens by using the at least one manufacturing machine;
c) transmitting the data set for each optical lens to at least one server configured for operating the at least one manufacturing machine designated for performing the at least one manufacturing step;
b) providing the data set for the at least one particular optical lens to be retrieved by the at least one manufacturing machine for manufacturing the at least one particular optical lens;
e) routing the plurality of the optical lenses to the at least one manufacturing machine designated for performing the at least one manufacturing step;
f) selecting the at least one particular optical lens from the plurality of the optical lenses by using the first item of information; and
g) performing the at least one manufacturing step at the at least one particular optical lens depending on the second item of information by using the at least one manufacturing machine.

Herein, the indicated steps may, preferably, be performed in the above-indicated order, commencing with method step d), followed by method steps a), c), b), e), and f), and finishing with method step g). Further, any or all of the indicated steps may be repeated several times and/or preformed concurrently in part, especially for at least one further particular optical lens from the plurality of the optical lenses.

For method steps a), b) and c), reference can be made to the description above or below.

According to method step d), a plurality of optical lenses is provided, wherein each optical lens is subject to undergo at least one manufacturing step being performed by at least one manufacturing machine configured for performing the at least one manufacturing step. Preferably, the plurality of the optical lenses may be provided as a batch for batchwise processing, in particular by providing them on a carrier that may be configured to carry the plurality of the optical lenses. As generally used, the term "batchwise" refers to a kind of processing in which a plurality of objects denoted by the term "batch" is jointly processed, followed by a break until a further plurality of objects denoted as a "further batch" is jointly processed subsequently. Further according to the present invention, each optical lens has an identifier. For a definition for the term "identifier" as well as for examples thereof, reference can be made to the description above or below.

According to method step e), the plurality of the optical lenses is routed to the at least one manufacturing machine which is designated for performing the at least one manufacturing step. As generally used, the term "routing" or any grammatical variation thereof refers to a process of selecting a path for an object from an initial location to at least one further location, in particular a plurality of locations. For this purpose, a manufacturing executing system as described elsewhere herein in more detail may be used. In this manner, the routing of the plurality of the optical lenses to the at least one manufacturing machine may be performed in an automatic fashion, especially by using, driving, controlling and monitoring at least one transport element, which may be configured for receiving and transporting a carrier that may carry the plurality of the optical lenses. For further examples as well as for a definition of the term "transport element", reference can be made to the description below. As an alternative, the routing of the plurality of the optical lenses to the at least one manufacturing machine may be performed in a manual fashion, whereby the manufacturing executing system may, preferably, provide at least one command to a person, especially in a visual, an acoustic, or a tactile manner. By way of example, the manufacturing executing system may generate an accompanying document, preferably for accompanying the carrier carrying the plurality of the optical lenses, wherein the accompanying document may comprise a human-readable text to be executed by a person responsible for routing the carrier. Alternatively or in addition, a loudspeaker can be used for such a task. Further alternatives may also be conceivable.

According to method step f), the at least one particular optical lens is selected from the plurality of the optical lenses by using the first item of information. As generally used, the term "selecting" or any grammatical variation thereof refers to a process of taking a particular item from a list of items. Accordingly, the method step f) addresses a process in which at least one particular optical lens is taken from plurality of the optical lenses, for which purpose the first item of information, which comprises a reference to the identifier for the at least one particular optical lens, is used. As a result thereof, the at least one particular optical lens is now ready for being processed according to method step g).

According to method step g), the at least one manufacturing step is performed at the at least one particular optical lens by using the at least one manufacturing machine, depending on the second item of information. As used herein, the term "performing" or any grammatical variation thereof refers to a process of applying at least one manufacturing step to the at least one optical lens. For examples concerning the at least one manufacturing step reference may be made to the description above. However, applying at least one further manufacturing step to the at least one optical lens may also be feasible.

In a particularly preferred embodiment, the methods as disclosed herein may comprise a further method step h) as follows:
h) reporting at least one status value related to at least one of the manufacturing machine or the manufacturing step.

For a purpose of performing method step h), the at least one manufacturing machine may comprise at least one sensor element, which may be configured for reporting at least one status value related to the manufacturing machine and/or the manufacturing step according to method step h). As generally used, the term "sensor element" refers to an element which is configured for generating a plurality of sensor signals related to at least one process parameter. Herein, each sensor signal may be or comprise a measured value, which may, preferably, be provided in form of an electrical value, such as a current value or a voltage value, or in form of an optical value. By way of example, the sensor element may be selected from a pressure sensor being configured for determining a force which is measured on a particular surface of the particular optical lens. Herein, a value for the force may be considered as a "status value", which denotes a particular value being influenced by at least one process parameter, especially a process parameter that has influence on a performance of the manufacturing step. As a further example, the sensor element may be selected from a liquid level sensor being configured for determining a status of a level of a liquid being used for coating purposes in at least one manufacturing step. Herein, a value for the liquid level sensor may be considered as a "status value", which is influenced by at least one process parameter that has influence on a performance by the manufacturing machine. However, using further sensor elements for determining at least one further status value may also be conceivable.

For further information concerning the method for manufacturing a plurality of optical lenses, reference can be made to the description of the method for providing data sets for the plurality of the optical lenses to at least one manufacturing machine as disclosed above or below in more detail.

In a further aspect, the present invention relates to a device for providing data sets for the plurality of the optical lenses to at least one manufacturing machine configured for performing at least one manufacturing step in manufacturing the plurality of the optical lenses. According to the present invention, the device comprises a manufacturing executing system, wherein the manufacturing executing system is configured for
a) generating data sets for a plurality of optical lenses, wherein the data set for at least one particular optical lens at least comprises:
   - a first item of information related to an identifier for the at least one particular optical lens; and
   - a second item of information related to at least one of:
      ∘ at least one manufacturing machine configured for performing at least one manufacturing step at the at least one particular optical lens; or
      ∘ the at least one manufacturing step to be performed at the at least one particular optical lens by using the at least one manufacturing machine;
c) transmitting the data set for each optical lens to at least one server configured for operating the at least one manufacturing machine designated for performing the at least one manufacturing step; and
b) providing the data set for the at least one particular optical lens to be retrieved by the at least one manufacturing machine for manufacturing the at least one particular optical lens.

For a definition of the term "manufacturing executing system" as well as for examples thereof, reference can be made to the description above.

In a further aspect, the present invention relates to a device for manufacturing a plurality of optical lenses. According to the present invention, the device for manufacturing a plurality of optical lenses comprises:
- at least one transport element, wherein the at least one transport element is configured for
   d) providing a plurality of optical lenses, wherein each optical lens has an identifier, wherein each optical lens is subject to undergo at least one manufacturing step being performed by at least one manufacturing machine configured for performing the at least one manufacturing step; and
- a manufacturing executing system, wherein the manufacturing executing system is configured for performing the following method steps:
   a) generating data sets for a plurality of optical lenses, wherein the data set for at least one particular optical lens at least comprises:
      - a first item of information related to the identifier for the at least one particular optical lens; and
      - a second item of information related to at least one of:
         ∘ at least one manufacturing machine configured for performing at least one manufacturing step at the at least one particular optical lens; or
         ∘ the at least one manufacturing step to be performed at the at least one particular optical lens by using the at least one manufacturing machine;
   b) providing the data set for the at least one particular optical lens to be retrieved by the at least one manufacturing machine for manufacturing the at least one particular optical lens;
- at least one server configured for operating the at least one manufacturing machine designated for performing the at least one manufacturing step; and
- at least one manufacturing machine designated for performing the at least one manufacturing step in manufacturing the plurality of the optical lenses, wherein the at least one manufacturing machine is configured for:
   c) transmitting the data set for each optical lens to at least one server configured for operating the at least one manufacturing machine designated for performing the at least one manufacturing step;
   e) routing the plurality of the optical lenses to the at least one manufacturing machine designated for performing the at least one manufacturing step;
   f) selecting the at least one particular optical lens from the plurality of the optical lenses by using the first item of information; and
   g) performing the at least one manufacturing step at the at least one particular optical lens depending on the second item of information by using the at least one manufacturing machine.

As generally used, the term " transport element" refers to an extended object, which is configured for receiving and transporting a plurality of further objects. In accordance with the present invention, a carrier, such as a tray, may be used for receiving and transporting the plurality of the optical lenses to the at least one manufacturing machine. In this manner, the at least one transport element may perform the routing of the plurality of the optical lenses in an automatic fashion, especially by using, driving, controlling and monitoring at least one transport element, which may be configured for receiving and transporting the carrier. Alternatively or in addition, the transport element may comprise a handling system, in particular selected from a robot or a part thereof. As a further alternative or still in addition, the transport element may comprise at least one of an autonomous mobile robot, an automated guided vehicle, or a drone. As a still further alternative, the routing of the plurality of the optical lenses to the at least one manufacturing machine may be performed in a manual fashion as described above in more detail. However, using a different type of transport element may also be feasible.

In a particular embodiment, the device for manufacturing the plurality of the optical lenses can be embodied as a single device, which comprises the device for providing data sets for the plurality of the optical lenses to at least one manufacturing machine. As an alternative, at least two elements of the indicated devices may be placed at different locations, wherein each element may comprise at least one communication interface configured to cooperate with at least one of the other element. Herein, the different locations may be in the same room, building, town, or country, or distributed over at least two continents. By way of example, the at least one manufacturing machine and the at least one transport element may be located at the same factory building while the manufacturing executing system may be located at a computer center in the same town or in a different town. Further examples are conceivable.

In a further aspect, the present invention refers to a computer program, which comprises executable instructions for performing at least one of the methods, preferably both methods, according to the present invention. For this purpose, the computer program may comprise instructions provided by using a computer program code being capable of performing any or all of the steps of the methods according to the present invention and, thus, for providing data sets for a plurality of optical lenses to at least one manufacturing machine configured for performing at least one manufacturing step in manufacturing the plurality of the optical lenses, or to manufacturing the plurality of the optical lenses, when implemented on a computer or a data processing device. The computer program can, preferably, be provided on non-transient computer-readable storage medium, particularly on a compact disc, an optical storage medium, directly on a computer or data processing device, or via a network, such as via an in-house network, a cloud server, or via internet.

For further details concerning the devices and the computer program, reference can be made to the description of the methods as disclosed elsewhere herein.

The methods and devices according to the present invention exhibit various advantages compared to methods and devices as known from the prior art. In particular, any requirement that each manufacturing machine has to request the complete data set for each optical lens each time after it has retrieved the first item of information from the identifier for the particular optical lens does no longer exist. As a result, a lower latency can be achieved with regard to the time until a response of the manufacturing executing system is obtained in case of a request from each manufacturing machine. As a consequence thereof, an important reason which has considerably retarded the manufacturing process of a batch of optical lenses is overcome.

In prior art standard communication protocols, such as DCS over TCP/IP, the values of labels comprise several fields and are not directly assigned to a label, wherein these fields are separated by special separators, such that each endpoint in a communication, especially the manufacturing executing system or a manufacturing machine, has to generate compound text strings therefrom or to convert text therefrom into individual values using the separators. Advantageously, this conversion is not necessary with OPC UA, thus saving expensive computing power and computing time. More importantly, using OPC UA considerably minimizes a risk for errors, such as an erroneous swapping of values. Further, using OPC UA increases transparency, in particular since all variables generated or to be used by a machine can be viewed at a glance. In addition, OPC UA provides embedded security mechanisms, such as data encryption and authentication. Still further, reading and writing the data sets as well as performing dialogs between machines can be implemented on a large number of platforms. By way of example, while it is very complex to implement DCS over TCP/IP on a simple PLC (Programmable Logic Controller), using OPC UA considerably facilitates this task.

As a still further particular advantage, the present invention allows balancing a work load between a number of manufacturing machines. In particular, the load balancing can lead to an improved rate of network utilization. Further, it allows an optimization of the routing of a job to a manufacturing machine having the fewest jobs in the queue for performing the at least one particular manufacturing step.

As used herein, the terms "have", "comprise" or "include" or any arbitrary grammatical variation thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

As further used herein, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

### Short description of the Figures

Further optional features and embodiments of the present invention are disclosed in more detail in the subsequent description of preferred embodiments, preferably in conjunction with the dependent claims. Therein, the respective optional features may be realized in an isolated fashion as well as in any arbitrary feasible combination, as the skilled person will realize. It is emphasized here that the scope of the invention is not restricted by the preferred embodiments. In the Figures:
- Figure 1: schematically illustrates an exemplary embodiment of a device for manufacturing a plurality of optical lenses according to the present invention; and
- Figure 2: schematically illustrates an exemplary embodiment of a method for manufacturing a plurality of optical lenses according to the present invention.

### Detailed description of the embodiments

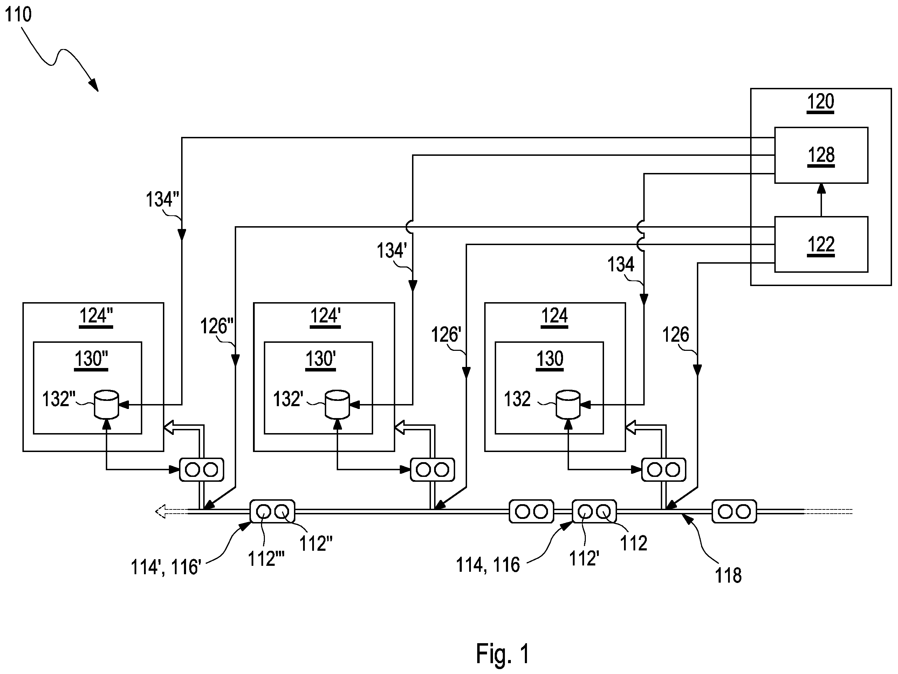

Figure 1 schematically illustrates an exemplary embodiment of a device 110 for manufacturing a plurality of optical lenses 112, 112', 112'', 112‴ according to the present invention, wherein each optical lens 112, 112', 112'', 112‴ has an identifier (not depicted here), by which at least one optical lens 112, 112', 112'', 112‴ is distinguishable from at least one further optical lens 112, 112', 112‴, 112‴ that is comprised by the same plurality of the optical lenses 112, 112', 112", 112‴. By way of example, the identifier may, especially, be selected from a permanent mark or, preferably, a non-permanent mark that can be removed after the manufacturing process has been completed. In particular, the identifier may have previously been placed on a portion of each optical lens 112, 112', 112", 112‴, preferably at a margin of each optical lens 112, 112', 112'', 112‴, especially in order not to disturb the manufacturing process.

As further depicted in Figure 1, the exemplary embodiment of the device 110 comprises a plurality of transport elements 114, 114' in form of carriers, each of which assumes here a form of a tray 116, 116', which is configured for providing and transporting the plurality of the optical lenses 112, 112', 112", 112‴. In the exemplary embodiment as shown in Figure 1, the providing and transporting of the optical lenses 112, 112', 112'', 112‴ is performed in an automatic manner by using, driving, controlling and monitoring the trays 116, 116', each of which carries the optical lenses 112, 112', 112'', 112‴ to a destination by using here a conveyor belt 118. In this exemplary embodiment, the identifier may be placed on each tray 116, 116', wherein a position of each optical lens 112, 112', 112'', 112‴ within the tray 116, 116' and an orientation of each surface of each optical lens 112, 112', 112", 112‴ within the tray 116, 116' is, further, known. Preferably, the identifier may comprise an RFID chip or tag (not depicted here) which is applied or attached to the respective tray 116, 116'. Alternatively or in addition, the identifier may be or comprise a barcode, in particular a standard barcode, especially selected from a linear code, a Data Matrix barcode, or a QR code. The identifier may, especially, correspond to an order number related to the optical lens 112, 112', 112", 112‴. As a further alternative (not depicted here), the providing and transporting of the plurality of the optical lenses 112, 112', 112", 112‴ may be performed in a manual fashion as described above in more detail.

As further schematically illustrated in Figure 1, the exemplary embodiment of the device 110 further comprises a manufacturing executing system 120. Accordingly, the manufacturing executing system 120 has a routing logic engine 122, which is configured for routing the plurality of the optical lenses 112, 112', 112'', 112‴ to a plurality of manufacturing machines 124, 124', 124". As indicated by arrows 126, 126', 126", the routing logic engine 122 as depicted here is configured for driving, controlling and monitoring the conveyor belt 118 in order to receive and transport the trays 116, 116' carrying the plurality of the optical lenses 112, 112', 112'', 112‴ to an appropriate station in, at or near the plurality of one of the manufacturing machines 124, 124', 124".

Accordingly the exemplary embodiment of the device 110 as shown in Figure 1, further, comprises the plurality of the manufacturing machines 124, 124', 124'', each of which is designated for performing at least one manufacturing step in manufacturing the plurality of the optical lenses 112, 112', 112'', 112‴ according to the present invention. In particular, each manufacturing step may comprise at least one treatment in a process of producing a particular optical lens 112, 112', 112'', 112‴ from a lens blank. For this purpose, a particular manufacturing machine 124, 124', 124" may be configured for performing the at least one manufacturing step, especially, selected from grinding, polishing, coating, engraving, taping, inspecting, or measuring one or both surfaces of the particular optical lens 112, 112', 112", 112‴. Alternatively or in addition, the at least one manufacturing step may be selected from washing, blocking, or deblocking the particular optical lens 112, 112', 112", 112‴. However, providing at least one further manufacturing machine that may be configured for performing at least one further manufacturing step may also be feasible.

The manufacturing executing system 120 as comprised by the exemplary embodiment of the device 110 has, according to Figure 1, a client 128, which is configured for generating data sets for the plurality of the optical lenses 112, 112', 112", 112‴ according to the present invention. Accordingly, the data set for a particular optical lens 112, 112', 112", 112‴ comprises a first item of information related to the identifier for the at least one particular optical lens 112, 112', 112'', 112"'. Herein, the first item of information corresponds to the identifier as described above, by which each optical lens 112, 112', 112'', 112‴ is furnished in order to make it distinguishable from any further optical lens 112, 112', 112'', 112‴ that is comprised by the same plurality of the optical lenses 112, 112', 112'', 112‴. In this respect, each manufacturing machine 124, 124', 124'' is configured for selecting the at least one particular optical lens 112, 112', 112", 112‴ from the plurality of the optical lenses 112, 112', 112'', 112‴ by using the first item of information.

Further, the data set for a particular optical lens 112, 112', 112'', 112‴ comprises a second item of information. In this respect, each manufacturing machine 124, 124', 124" is configured for performing the at least one manufacturing step at the particular optical lens 112, 112', 112'', 112‴ depending on the second item of information. For this purpose, the second item of information may be related to at least one manufacturing step to be performed at the at least one particular optical lens 112, 112', 112'', 112‴ by using the at least one manufacturing machine 124, 124', 124". By way of example, the second item of information may comprise at last one of a value for or a duration of force to be exerted on a particular surface of the particular optical lens 112, 112', 112'', 112‴, wherein the force may be used for grinding the particular surface of the particular optical lens 112, 112', 112", 112‴. As a further example, the second item of information may comprise at last one of a substance to be applied or a duration of appliance to a particular surface of the particular optical lens 112, 112', 112'', 112‴, wherein the substance may be used for coating the particular surface of the particular optical lens. However, using another manufacturing step may also be conceivable.

Alternatively or in addition, the second item of information may be related to the at least one manufacturing machine 124, 124', 124'', which is configured for performing at least one manufacturing step at the at least one particular optical lens 112, 112', 112'', 112‴. By way of example, the particular manufacturing machine may be configured for turning a particular optical lens 112, 112', 112", 112‴ always according to a predefined value, such as about 180°, along a particular axis. As an alternative, the particular manufacturing machine 124, 124', 124'' may be configured for performing a task in a manner that at least one sensor element (not depicted here) may be configured for reporting to the particular manufacturing machine 124, 124', 124''. By way of example, the particular manufacturing machine may be configured for applying a coating having a predefined property to the particular optical lens 112, 112', 112'', 112‴, wherein a correct application of the coating may be monitored by the at least one sensor element, which may be configured for monitoring the predefined property. However, using further alternatives may also be conceivable.

In addition, the data set for a particular optical lens 112, 112', 112'', 112‴ may, still, comprise at least one further item of information, in particular, nominal data and/or effective data related to refractive values for the particular optical lens 112, 112', 112", 112‴, especially values for a sphere, a cylinder, and a cylinder axis, and optionally, for a prism, a prism base, and an addition of the particular optical lens 112, 112', 112", 112‴.

For a purpose of a data exchange between the manufacturing executing system 120, the manufacturing machines 124, 124', 124" and the conveyor belt 118 a communication protocol is used which is, preferably, based on OPC Unified Architecture (OPC UA). Consequently, each data set which is transmitted according to the present invention is provided according to OPC UA as individual variables, wherein a plurality of variables is transmitted as serialized individual variables. As indicated above, the content of each variable comprises at least one piece of information expressed as a value being of a data type that is, particularly, selected from a bit, an integer value, a float value, an alphanumeric value, or a text string, or of an object comprising at least two of the data types. As a result, the plurality of variables are provided as distinguishable items in that each item can be addressed independently from the other items comprised by the plurality of variables, wherein the plurality of variables are transmitted as distinguishable items in a consecutive manner.

Using OPC UA as the preferred communication protocol for data transmission particularly contrasts to generating data sets in form of text messages as known from prior art communication protocols, such as DCS as mentioned above, wherein each data set is composed of compound text strings that comprise consecutive individual values converted into text and separated by a specific separator, such as a semicolon or an equal sign. As a particular advantage of the present invention, the generating of a compound text string is no longer required. For writing a particular item of information, the manufacturing executing system 120 is no longer required to transform the individual values into compound text strings by using the specific separator. Similarly, for reading the particular item of information, the manufacturing machine 124, 124', 124" has no longer to convert the compound text strings from a text message into the individual values by using the specific separator.

In particular, using individual variables allows individually addressing name and content of a particular variable, whereby, during an execution of a related computer program, the name of the particular variable is fixed, while a value of the particular variable as comprised by the content of the variable can be maintained or altered during a course of the execution of the related computer program. In this manner, the second item of information can be modified during the course of the manufacturing process. By way of example, the variable can be altered following an external demand that may be provided, especially in order to correct an error related to the particular optical lens 112, 112', 112'', 112‴. As a further example, the variable can be altered following a notification by at least one sensor element, especially in order to ensure a correct application of a substance, such as a coating, to the particular optical lens 112, 112', 112", 112‴. However, further examples may also be conceivable.

As further schematically illustrated in Figure 1, the client 128 as comprised by the manufacturing executing system 120 is, further, configured for transmitting the data set for each optical lens 112, 112', 112'', 112‴ to at least one server 130, 130', 130". As Figure 1 shows, each server 130, 130', 130" is comprised by a particular manufacturing machine 124, 124', 124", thus being assigned to the particular manufacturing machine 124, 124', 124''. As an alternative (not depicted here), at least two individual manufacturing machines may share a common server. As a further alternative (not depicted here), a particular manufacturing machine may have at least two individual servers, especially being assigned to at least two individual portions of the particular manufacturing machine.

In the exemplary embodiment as depicted in Figure 1, each server 130, 130', 130'', advantageously, comprises a cache 132, 132', 132'', which acts as a buffer that is configured for storing a predefined number of the data sets for the plurality of the optical lenses 112, 112', 112", 112‴, wherein the stored the data sets can, subsequently, be retrieved from the cache 130, 130', 130" upon demand by the particular manufacturing machine 124, 124', 124'' that is assigned to the cache 130, 130', 130'' by using a particular request.

In this fashion, the data set for each particular optical lens 112, 112', 112", 112‴ is transmitted, as indicated by arrows 134, 134', 134'', to the appropriate server 130, 130', 130", which is configured for operating a particular manufacturing machine 124, 124', 124'' that is designated for performing the at least one corresponding manufacturing step. Owing to the definite assignment between each particular manufacturing machine 124, 124', 124" and each particular server 130, 130', 130" as schematically illustrated in Figure 1, each particular manufacturing machine 124, 124', 124" can retrieve the data set for each particular optical lens 112, 112', 112", 112‴ by placing a respective demand to the corresponding server 130, 130', 130" being assigned to the particular manufacturing machine 124, 124', 124''.

In this respect, the manufacturing executing system 120 is configured for transmitting the data set for each particular optical lens 112, 112', 112", 112‴ to the particular server 130, 130', 130" assigned to the particular manufacturing machine 124, 124', 124" in advance. In this fashion, the particular server 130, 130', 130" stores a definite number of tasks that are expected to be performed in near future. Subsequently, the particular manufacturing machine 124, 124', 124" retrieves the required data set just in time without being required to queue for placing a direct request at the manufacturing executing system 120. As a consequence thereof, the manufacturing process can, considerably, be accelerated by using a definite procedure for processing the manufacturing steps, particularly owing to the definite arrangement of the exemplary device 110 according to the present invention.

In a further preferred embodiment, at least one particular manufacturing machine 124, 124', 124" may comprise at least one sensor element (not depicted here). The sensor element may, particularly, be configured for generating a plurality of sensor signals related to at least one process parameter. Herein, each sensor signal may be or comprise a measured value, which may, preferably, be provided in form of an electrical value, such as a current value or a voltage value, or in form of an optical value. Especially, the sensor element may be configured for reporting at least one status value related to a particular manufacturing machine 124, 124', 124" and/or a particular manufacturing step. By way of example, the sensor element may be selected from a pressure sensor being configured for determining a force which is measured on a particular surface of the particular optical lens 112, 112', 112", 112". As a further example, the sensor element may be selected from a liquid level sensor being configured for determining a status of a level of a liquid being used for coating purposes in a manufacturing step. Further examples are conceivable.

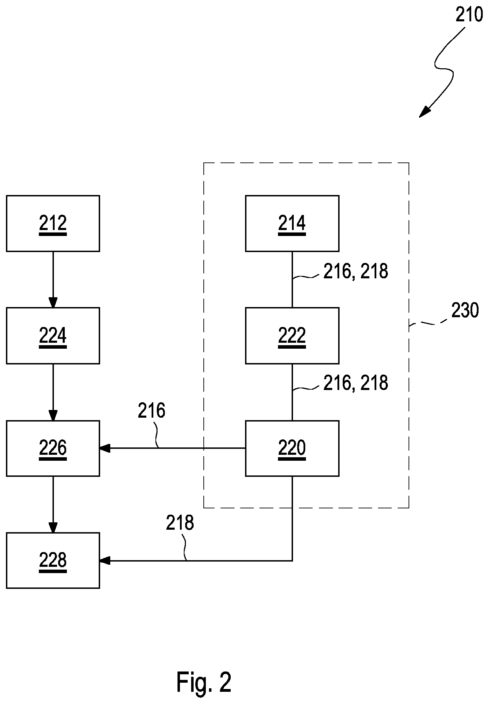

Figure 2 schematically illustrates an exemplary embodiment of a method 210 for manufacturing the plurality of optical lenses 112, 112', 112", 112" according to the present invention.

In a lens providing step 212 according to method step d), the plurality of optical lenses 112, 112', 112", 112" is provided. As already indicated above, each optical lens 112, 112', 112'', 112'' has a identifier. Further, each optical lens 112, 112', 112'', 112" is subject to undergo at least one manufacturing step that is performed by the at least one manufacturing machine 124, 124', 124" configured for performing the at least one manufacturing step.

In a data generating step 214 according to method step a), the data sets for the plurality of the optical lenses 112, 112', 112'', 112" is provided. As already indicated above, each data set for at least one particular optical lens 112, 112', 112'', 112" comprises a first item 216 of information related to the identifier for the at least one particular optical lens 112, 112', 112", 112" and a second item 218 of information. Herein, the second item 218 of information is related to the at least one manufacturing machine 124, 124', 124'' configured for performing the at least one manufacturing step at the at least one particular optical lens 112, 112', 112'', 112" and/or to the at least one manufacturing step to be performed at the at least one particular optical lens 112, 112', 112'', 112'' by using the at least one manufacturing machine 124, 124', 124''. In addition, the data sets for the plurality of the optical lenses 112, 112', 112'', 112'' may comprise at least one further item of information, such as described above in more detail.

In a data providing step 220 according to method step b), the data set for each optical lens 112, 112', 112", 112" is provided in order to be retrieved by the at least one manufacturing machine 124, 124', 124" for manufacturing the particular optical lens 112, 112', 112", 112".

In accordance with the present invention, a data transmitting step 222 according to method step c) is performed prior to the data providing step 220. In accordance with the data transmitting step 222, the data set for each optical lens 112, 112', 112", 112'' is transmitted to the at least one server 130, 130', 130'', which is configured for operating the at least one manufacturing machine 124, 124', 124" designated for performing the at least one manufacturing step. For the data exchange between the manufacturing executing system 120, the manufacturing machines 124, 124', 124" and the conveyor belt 118 OPC UA can, preferably, be used as communication protocol, thus, allowing transmitting each item 216, 218 of information comprising a plurality of variables as serialized individual variables, preferably as described above in more detail.

In a lens routing step 224 according to method step e), the plurality of the optical lenses 112, 112', 112", 112" is routed to the at least one manufacturing machine 124, 124', 124'', which is designated for performing the at least one manufacturing step.

In a lens selecting step 226 according to method step f), the at least one particular optical lens 112, 112', 112'', 112" is selected from the plurality of the optical lenses 112, 112', 112'', 112" by using the first item 216 of information.

In a lens manufacturing step 228 according to method step g), the at least one manufacturing step is performed at the at least one particular optical lens 112, 112', 112'', 112'', that has been provided to the particular manufacturing machine 124, 124', 124'' in the lens selecting step 226, depending on a content of the second item 218 of information, by using the at least one particular manufacturing machine 124, 124', 124''.

As indicated above, the data set for a particular optical lens 112, 112', 112'', 112‴ has been transmitted to the particular server 130, 130', 130" in the data transmitting step 222, such that the second item 218 of information, which is used for performing the at least one manufacturing step at the particular optical lens 112, 112', 112'', 112", is already available to the particular manufacturing machine 124, 124', 124'', which assigned to the particular server 130, 130', 130'', before the particular optical lens 112, 112', 112", 112‴ reaches the particular manufacturing machine 124, 124', 124''.

As further described above in more detail, the data generating step 214, the data providing step 220, and the data transmitting step 222 together constitute a method 230 for providing the data sets for the plurality of the optical lenses 112, 112', 112", 112'' to the at least one manufacturing machine 124, 124', 124''.

### List of Reference Signs

- 110: device for manufacturing a plurality of optical lenses
- 112, 112', 112", 112‴: optical lens
- 114, 114': transport element
- 116, 116': tray
- 118: conveyor belt
- 120: manufacturing executing system
- 122: routing logic engine
- 124, 124', 124": manufacturing machine
- 126, 126', 126": arrow
- 128: client
- 130, 130', 130": server
- 132, 132', 132": cache
- 134, 134', 134": arrow
- 210: method for manufacturing a plurality of optical lenses
- 212: lens providing step
- 214: data generating step
- 216: first item of information
- 218: second item of information
- 220: data providing step
- 222: data transmitting step
- 224: lens routing step
- 226: lens selecting step
- 228: lens manufacturing step
- 230: method for providing the data sets for the plurality of the optical lenses

## Claims

1. A method (230) for providing data sets for a plurality of optical lenses (112, 112', 112", 112‴) to at least one manufacturing machine (124, 124', 124') configured for performing at least one manufacturing step in manufacturing the plurality of the optical lenses (112, 112', 112'', 112‴), the method (230) comprising the following method steps:
a) generating data sets for a plurality of optical lenses (112, 112', 112", 112‴), wherein the data set for at least one particular optical lens (112, 112', 112", 112‴) at least comprises:
- a first item (216) of information related to an identifier for the at least one particular optical lens (112, 112', 112'', 112‴); and
- a second item (218) of information related to at least one of:
∘ at least one manufacturing machine (124, 124', 124') configured for performing at least one manufacturing step at the at least one particular optical lens (112, 112', 112'', 112‴); or
∘ the at least one manufacturing step to be performed at the at least one particular optical lens by using the at least one manufacturing machine (124, 124', 124');
b) providing the data set for the at least one particular optical lens (112, 112', 112'', 112‴) to be retrieved by the at least one manufacturing machine (124, 124', 124') for manufacturing the at least one particular optical lens (112, 112', 112", 112‴);
c) transmitting the data set for each optical lens (112, 112', 112'', 112‴) to at least one server (130, 130', 130'') configured for operating the at least one manufacturing machine (124, 124', 124') designated for performing the at least one manufacturing step, wherein the data set for the at least one particular optical lens (112, 112', 112", 112‴) is stored in the at least one server (130, 130', 130") at least until requested by the at least one manufacturing machine (124, 124', 124') according to method step b);
**characterized in**
**that** each server (130, 130', 130") is comprised by a particular manufacturing machine (124, 124', 124''), thus being assigned to the particular manufacturing machine (124, 124', 124").

2. A method (210) for manufacturing a plurality of optical lenses (112, 112', 112'', 112‴), the method comprising the following method steps:
d) providing a plurality of optical lenses (112, 112', 112", 112‴), wherein each optical lens (112, 112', 112'', 112‴) has an identifier, wherein each optical lens (112, 112', 112'', 112‴) is subject to undergo at least one manufacturing step being performed by at least one manufacturing machine (124, 124', 124') configured for performing the at least one manufacturing step;
a) generating data sets for the plurality of the optical lenses (112, 112', 112", 112‴), wherein the data set for at least one particular optical lens (112, 112', 112'', 112‴) at least comprises:
- a first item (216) of information related to the identifier for the at least one particular optical lens (112, 112', 112'', 112‴); and
- a second item (218) of information related to at least one of:
∘ the at least one manufacturing machine (124, 124', 124') configured for performing the at least one manufacturing step at the at least one particular optical lens (112, 112', 112", 112‴); or
∘ the at least one manufacturing step to be performed at the at least one particular optical lens (112, 112', 112'', 112‴) by using the at least one manufacturing machine (124, 124', 124');
b) providing the data set for the at least one particular optical lens (112, 112', 112'', 112‴) to be retrieved by the at least one manufacturing machine (124, 124', 124') for manufacturing the at least one particular optical lens (112, 112', 112", 112‴);
c) transmitting the data set for each optical lens (112, 112', 112'', 112‴) to at least one server (130, 130', 130'') configured for operating the at least one manufacturing machine (124, 124', 124') designated for performing the at least one manufacturing step, wherein the data set for the at least one particular optical lens (112, 112', 112", 112‴) is stored in the at least one server (130, 130', 130'') at least until requested by the at least one manufacturing machine (124, 124', 124') according to method step b);
e) routing the plurality of the optical lenses (112, 112', 112", 112‴) to the at least one manufacturing machine (124, 124', 124') designated for performing the at least one manufacturing step;
f) selecting the at least one particular optical lens (112, 112', 112", 112‴) from the plurality of the optical lenses (112, 112', 112'', 112‴) by using the first item (216) of information;
g) performing the at least one manufacturing step at the at least one particular optical lens (112, 112', 112'', 112‴) depending on the second item (218) of information by using the at least one manufacturing machine (124, 124', 124');
**characterized in**
**that** each server (130, 130', 130") is comprised by a particular manufacturing machine (124, 124', 124''), thus being assigned to the particular manufacturing machine (124, 124', 124").

3. The method (210, 230) according to any one of the preceding claims, wherein each item (216, 218) of information comprising a plurality of variables is transmitted as serialized individual variables.

4. The method (210, 230) according to any one of the preceding claims, wherein transmitting the data set for each optical lens (112, 112', 112", 112‴) according to method step c) to the at least one server (130, 130', 130") is performed prior to retrieving the data set for the at least one particular optical lens (112, 112', 112'', 112‴) by the at least one manufacturing machine (124, 124', 124') for manufacturing the at least one particular optical lens (112, 112', 112", 112‴) according to method step b).

5. The method (210, 230) according to any one of the preceding claims, wherein the at least one manufacturing machine (124, 124', 124') retrieves the data set for the at least one particular optical lens (112, 112', 112'', 112‴) from the at least one server (130, 130', 130'') configured for operating the at least one manufacturing machine (124, 124', 124') according to method step b) prior to performing the at least one manufacturing step according to method step g) at the at least one particular optical lens (112, 112', 112", 112‴).

6. The method (210, 230) according to any one of the preceding claims, wherein the at least one server (130, 130', 130") comprises a cache (132, 132', 132"), wherein the cache (132, 132', 132'') is configured for storing a predefined number of data sets.

7. The method (210, 230) according to the preceding claim, wherein a first data set firstly stored in the cache (132, 132', 132'') is overwritten by a further data set if the further data set is transmitted to the server (130, 130', 130'') after the cache (132, 132', 132'') already comprises the predefined number of data sets.

8. The method (210, 230) according to any one of the preceding claims, wherein the routing of the plurality of the optical lenses (112, 112', 112'', 112‴) according to method step e) to the at least one manufacturing machine (124, 124', 124') is performed in an automatic manner or in a manual fashion.

9. The method (210, 230) according to any one of the preceding claims, further comprising a method step of:
h) reporting at least one status value related to at least one of the manufacturing machine (124, 124', 124') or the manufacturing step.

10. A device for providing data sets for a plurality of optical lenses (112, 112', 112", 112‴) to at least one manufacturing machine (124, 124', 124') configured for performing at least one manufacturing step in manufacturing the plurality of the optical lenses (112, 112', 112'', 112‴), the device comprising a manufacturing executing system (120), wherein the manufacturing executing system (120) is configured for:
a) generating data sets for a plurality of optical lenses (112, 112', 112'', 112‴), wherein the data set for at least one particular optical lens (112, 112', 112", 112‴) at least comprises:
- a first item (216) of information related to an identifier for the at least one particular optical lens (112, 112', 112'', 112‴); and
- a second item (218) of information related to at least one of:
∘ at least one manufacturing machine (124, 124', 124') configured for performing at least one manufacturing step at the at least one particular optical lens (112, 112', 112'', 112‴); or
∘ the at least one manufacturing step to be performed at the at least one particular optical lens (112, 112', 112'', 112‴) by using the at least one manufacturing machine (124, 124', 124');
b) providing the data set for the at least one particular optical lens (112, 112', 112'', 112‴) to be retrieved by the at least one manufacturing machine (124, 124', 124') for manufacturing the at least one particular optical lens (112, 112', 112", 112‴);
c) transmitting the data set for each optical lens (112, 112', 112'', 112‴) to at least one server (130, 130', 130") configured for operating the at least one manufacturing machine (124, 124', 124') designated for performing the at least one manufacturing step, wherein the manufacturing executing system (120) is further configured for storing the data set for the at least one particular optical lens (112, 112', 112'', 112‴) in the at least one server (130, 130', 130'') at least until requested by the at least one manufacturing machine (124, 124', 124') according to method step b);
**characterized in**
**that** each server (130, 130', 130") is comprised by a particular manufacturing machine (124, 124', 124''), thus being assigned to the particular manufacturing machine (124, 124', 124").

11. A device (110) for manufacturing a plurality of optical lenses (112, 112', 112", 112‴), the device (110) comprising:
- at least one transport element (114, 114'), wherein the at least one transport element (114, 114') is configured for:
d) providing a plurality of optical lenses (112, 112', 112'', 112‴), wherein each optical lens (112, 112', 112", 112‴) has an identifier, wherein each optical lens (112, 112', 112'', 112‴) is subject to undergo at least one manufacturing step being performed by at least one manufacturing machine (124, 124', 124') configured for performing the at least one manufacturing step; and
- a manufacturing executing system (120), wherein the manufacturing executing system (120) is configured for performing the following method steps:
a) generating data sets for a plurality of optical lenses (112, 112', 112", 112‴), wherein the data set for at least one particular optical lens (112, 112', 112'', 112‴) at least comprises:
- a first item (216) of information related to the identifier for the at least one particular optical lens (112, 112', 112'', 112‴); and
- a second item (218) of information related to at least one of:
∘ at least one manufacturing machine (124, 124', 124') configured for performing at least one manufacturing step at the at least one particular optical lens (112, 112', 112'', 112‴); or
∘ the at least one manufacturing step to be performed at the at least one particular optical lens (112, 112', 112'', 112‴) by using the at least one manufacturing machine (124, 124', 124');
b) providing the data set for the at least one particular optical lens (112, 112', 112'', 112‴) to be retrieved by the at least one manufacturing machine (124, 124', 124') for manufacturing the at least one particular optical lens (112, 112', 112'', 112‴);
c) transmitting the data set for each optical lens (112, 112', 112'', 112‴) to at least one server (130, 130', 130") configured for operating the at least one manufacturing machine (124, 124', 124') designated for performing the at least one manufacturing step;
e) routing the plurality of the optical lenses (112, 112', 112'', 112‴) to the at least one manufacturing machine (124, 124', 124') designated for performing the at least one manufacturing step; and
- at least one manufacturing machine (124, 124', 124') designated for performing the at least one manufacturing step in manufacturing the plurality of the optical lenses (112, 112', 112'', 112‴), wherein the at least one manufacturing machine (124, 124', 124') is configured for:
f) selecting the at least one particular optical lens (112, 112', 112", 112‴) from the plurality of the optical lenses (112, 112', 112'', 112‴) by using the first item (216) of information;
g) performing the at least one manufacturing step at the at least one particular optical lens (112, 112', 112'', 112‴) depending on the second item (218) of information by using the at least one manufacturing machine (124, 124', 124');
- at least one server (130, 130', 130") configured for operating the at least one manufacturing machine (124, 124', 124') designated for performing the at least one manufacturing step, wherein the manufacturing executing system (120) is further configured for storing the data set for the at least one particular optical lens (112, 112', 112", 112‴) in the at least one server (130, 130', 130'') at least until requested by the at least one manufacturing machine (124, 124', 124') according to method step b);
**characterized in**
**that** each server (130, 130', 130") is comprised by a particular manufacturing machine (124, 124', 124''), thus being assigned to the particular manufacturing machine (124, 124', 124").

12. The device according to the preceding claim, wherein each server (130, 130', 130'') is assigned to or comprised by a particular manufacturing machine (124, 124', 124') for which the server (130, 130', 130") is configured for operate it.

13. The device according to any one of the two preceding claims, further comprising at least one of:
- at least one transport element configured for routing the at least one optical lens (112, 112', 112", 112‴) according to method step e) to the at least one manufacturing machine (124, 124', 124') designated for performing the at least one manufacturing step; or
- at least one sensor element configured for reporting according to method step h) at least one status value related to at least one of the manufacturing machine (124, 124', 124') or the manufacturing step.

14. A computer program comprising executable instructions for performing at least one method step according to any one of claims 1 to 9 by using a device according to any one of claims 10 to 13.

## Patentansprüche

1. Verfahren (230) zum Liefern von Datensätzen für eine Vielzahl von optischen Linsen (112, 112', 112'', 112"') an mindestens eine Herstellungsmaschine (124, 124', 124'), ausgelegt zum Durchführen von mindestens einem Herstellungsschritt beim Herstellen der Vielzahl der optischen Linsen (112, 112', 112", 112‴), wobei das Verfahren (230) die folgenden Verfahrensschritte umfasst:
a) Erzeugen von Datensätzen für eine Vielzahl von optischen Linsen (112, 112', 112", 112‴), wobei der Datensatz für mindestens eine spezielle optische Linse (112, 112', 112", 112‴) mindestens Folgendes umfasst:
- einen ersten Eintrag (216) von Informationen, betreffend eine Kennung für die mindestens eine spezielle optische Linse (112, 112', 112", 112"'); und
- einen zweiten Eintrag (218) von Informationen, betreffend mindestens eines von:
∘ mindestens eine Herstellungsmaschine (124, 124', 124'), ausgelegt zum Durchführen mindestens eines Herstellungsschritts an der mindestens einen speziellen optischen Linse (112, 112', 112", 112"'); oder
∘ wobei der mindestens eine Herstellungsschritt an der mindestens einen speziellen optischen Linse unter Verwendung der mindestens einen Herstellungsmaschine (124, 124', 124') durchgeführt werden soll;
b) Liefern des Datensatzes für die mindestens eine spezielle optische Linse (112, 112', 112", 112‴), der von der mindestens einen Herstellungsmaschine (124, 124', 124') abgerufen werden soll, zum Herstellen der mindestens einen speziellen optischen Linse (112, 112', 112'', 112‴);
c) Übertragen des Datensatzes für jede optische Linse (112, 112', 112", 112"') an mindestens einen Server (130, 130', 130"), der ausgelegt ist zum Betreiben der mindestens einen Herstellungsmaschine (124, 124', 124'), die zum Durchführen des mindestens einen Herstellungsschritts vorgesehen ist, wobei der Datensatz für die mindestens eine spezielle optische Linse (112, 112', 112", 112"') in dem mindestens einen Server (130, 130', 130") gespeichert wird, zumindest solange bis er durch die mindestens eine Herstellungsmaschine (124, 124', 124') angefordert wird, gemäß Verfahrensschritt b);
**dadurch gekennzeichnet,**
**dass** jeder Server (130, 130', 130") in einer speziellen Herstellungsmaschine (124, 124', 124") enthalten ist, wodurch dieser der speziellen Herstellungsmaschine (124, 124', 124") zugewiesen ist.

2. Verfahren (210) zum Herstellen einer Vielzahl von optischen Linsen (112, 112', 112", 112"'), wobei das Verfahren die folgenden Verfahrensschritte umfasst:
d) Anliefern einer Vielzahl von optischen Linsen (112, 112', 112", 112"'), wobei jede optische Linse (112, 112', 112", 112"') eine Kennung aufweist, wobei jede optische Linse (112, 112', 112", 112‴) mindestens einem Herstellungsschritt unterzogen werden soll, der von der mindestens einen Herstellungsmaschine (124, 124', 124') durchgeführt wird, die ausgelegt ist zum Durchführen des mindestens einen Herstellungsschritts;
a) Erzeugen von Datensätzen für die Vielzahl der optischen Linsen (112, 112', 112", 112‴), wobei der Datensatz für mindestens eine spezielle optische Linse (112, 112', 112", 112‴) mindestens Folgendes umfasst:
- einen ersten Eintrag (216) von Informationen, betreffend die Kennung für die mindestens eine spezielle optische Linse (112, 112', 112", 112‴); und
- einen zweiten Eintrag (218) von Informationen, betreffend mindestens eines von:
∘ die mindestens eine Herstellungsmaschine (124, 124', 124'), die ausgelegt ist zum Durchführen des mindestens einen Herstellungsschritts an der mindestens einen speziellen optischen Linse (112, 112', 112", 112"'); oder
∘ wobei der mindestens eine Herstellungsschritt an der mindestens einen speziellen optischen Linse (112, 112', 112", 112"') unter Verwendung der mindestens einen Herstellungsmaschine (124, 124', 124') durchgeführt werden soll;
b) Liefern des Datensatzes für die mindestens eine spezielle optische Linse (112, 112', 112", 112‴), die von der mindestens einen Herstellungsmaschine (124, 124', 124') abgerufen werden soll, zum Herstellen der mindestens einen speziellen optischen Linse (112, 112', 112'', 112"');
c) Übertragen des Datensatzes für jede optische Linse (112, 112', 112", 112"') an mindestens einen Server (130, 130', 130"), der ausgelegt ist zum Betreiben der mindestens einen Herstellungsmaschine (124, 124', 124'), die zum Durchführen des mindestens einen Herstellungsschritts vorgesehen ist, wobei der Datensatz für die mindestens eine spezielle optische Linse (112, 112', 112", 112"') in dem mindestens einen Server (130, 130', 130") gespeichert wird, zumindest solange bis er durch die mindestens eine Herstellungsmaschine (124, 124', 124') angefordert wird, gemäß Verfahrensschritt b);
e) Routen der Vielzahl der optischen Linsen (112, 112', 112", 112‴) zu der mindestens einen Herstellungsmaschine (124, 124', 124'), die zum Durchführen des mindestens einen Herstellungsschritts vorgesehen ist;
f) Auswählen der mindestens einen speziellen optischen Linse (112, 112', 112", 112"') aus der Vielzahl der optischen Linsen (112, 112', 112'', 112‴) unter Verwendung des ersten Eintrags (216) von Informationen;
g) Durchführen des mindestens einen Herstellungsschritts an der mindestens einen speziellen optischen Linse (112, 112', 112", 112‴) in Abhängigkeit von dem zweiten Eintrag (218) von Informationen unter Verwendung der mindestens einen Herstellungsmaschine (124, 124', 124');
**dadurch gekennzeichnet,**
**dass** jeder Server (130, 130', 130") in einer speziellen Herstellungsmaschine (124, 124', 124") enthalten ist, wodurch dieser der speziellen Herstellungsmaschine (124, 124', 124") zugewiesen ist.

3. Verfahren (210, 230) nach einem der vorhergehenden Ansprüche, wobei jeder Eintrag (216, 218) von Informationen, eine Vielzahl von Variablen umfassend, als serialisierte individuelle Variablen übertragen wird.

4. Verfahren (210, 230) nach einem der vorhergehenden Ansprüche, wobei Übertragen des Datensatzes für jede optische Linse (112, 112', 112", 112‴), gemäß Verfahrensschritt c), an den mindestens einen Server (130, 130', 130") durchgeführt wird vor Abrufen des Datensatzes für die mindestens eine spezielle optische Linse (112, 112', 112", 112"') durch die mindestens eine Herstellungsmaschine (124, 124', 124') zum Herstellen der mindestens einen speziellen optischen Linse (112, 112', 112'', 112"') gemäß Verfahrensschritt b).

5. Verfahren (210, 230) nach einem der vorhergehenden Ansprüche, wobei die mindestens eine Herstellungsmaschine (124, 124', 124') den Datensatz für die mindestens eine spezielle optische Linse (112, 112', 112", 112"') von dem mindestens einen Server (130, 130', 130") abruft, der ausgelegt ist zum Betreiben der mindestens einen Herstellungsmaschine (124, 124', 124') gemäß Verfahrensschritt b), bevor der mindestens eine Herstellungsschritt gemäß Verfahrensschritt g) an der mindestens einen speziellen optischen Linse (112, 112', 112'', 112‴) durchgeführt wird.

6. Verfahren (210, 230) nach einem der vorhergehenden Ansprüche, wobei der mindestens eine Server (130, 130', 130") einen Cache (132, 132', 132") aufweist, wobei der Cache (132, 132', 132") ausgelegt ist zum Speichern einer vordefinierten Anzahl von Datensätzen.

7. Verfahren (210, 230) nach dem vorhergehenden Anspruch, wobei ein erster Datensatz, der zuerst in dem Cache (132, 132', 132") gespeichert ist, durch einen weiteren Datensatz überschrieben wird, wenn der weitere Datensatz an den Server (130, 130', 130") übertragen wird, nachdem der Cache (132, 132', 132") bereits die vordefinierte Anzahl von Datensätzen aufweist.

8. Verfahren (210, 230) nach einem der vorhergehenden Ansprüche, wobei das Routen der Vielzahl der optischen Linsen (112, 112', 112'', 112"') gemäß Verfahrensschritt e) an die mindestens eine Herstellungsmaschine (124, 124', 124') auf eine automatische Weise oder auf einem manuellen Weg durchgeführt wird.

9. Verfahren (210, 230) nach einem der vorhergehenden Ansprüche, ferner umfassend einen Verfahrensschritt von:
h) Melden mindestens eines Statuswerts, betreffend mindestens eine der Herstellungsmaschinen (124, 124', 124') oder den Herstellungsschritt.

10. Vorrichtung zum Liefern von Datensätzen für eine Vielzahl von optischen Linsen (112, 112', 112'', 112"') an mindestens eine Herstellungsmaschine (124, 124', 124'), ausgelegt zum Durchführen von mindestens einem Herstellungsschritt beim Herstellen der Vielzahl der optischen Linsen (112, 112', 112", 112‴), wobei die Vorrichtung ein Herstellungsausführungssystem (120) umfasst, wobei das Herstellungsausführungssystem (120) ausgelegt ist zum:
a) Erzeugen von Datensätzen für eine Vielzahl von optischen Linsen (112, 112', 112", 112"'), wobei der Datensatz für mindestens eine spezielle optische Linse (112, 112', 112", 112‴) mindestens Folgendes umfasst:
- einen ersten Eintrag (216) von Informationen, betreffend eine Kennung für die mindestens eine spezielle optische Linse (112, 112', 112", 112"'); und
- einen zweiten Eintrag (218) von Informationen, betreffend mindestens eines von:
∘ mindestens eine Herstellungsmaschine (124, 124', 124'), die ausgelegt ist zum Durchführen mindestens eines Herstellungsschritts an der mindestens einen speziellen optischen Linse (112, 112', 112", 112"'); oder
o wobei der mindestens eine Herstellungsschritt an der mindestens einen speziellen optischen Linse (112, 112', 112", 112"') unter Verwendung der mindestens einen Herstellungsmaschine (124, 124', 124') durchgeführt werden soll;
b) Liefern des Datensatzes für die mindestens eine spezielle optische Linse (112, 112', 112", 112‴), der von der mindestens einen Herstellungsmaschine (124, 124', 124') abgerufen werden soll, zum Herstellen der mindestens einen speziellen optischen Linse (112, 112', 112'', 112"');
c) Übertragen des Datensatzes für jede optische Linse (112, 112', 112", 112"') an mindestens einen Server (130, 130', 130"), der ausgelegt ist zum Betreiben der mindestens einen Herstellungsmaschine (124, 124', 124'), die zum Durchführen des mindestens einen Herstellungsschritts vorgesehen ist, wobei das Herstellungsausführungssystem (120) ferner ausgelegt ist zum Speichern des Datensatzes für die mindestens eine spezielle optische Linse (112, 112', 112", 112‴) in dem mindestens einen Server (130, 130', 130"), zumindest solange bis er durch die mindestens eine Herstellungsmaschine (124, 124', 124') angefordert wird, gemäß Verfahrensschritt b);
**dadurch gekennzeichnet,**
**dass** jeder Server (130, 130', 130") in einer speziellen Herstellungsmaschine (124, 124', 124") enthalten ist, wodurch dieser der speziellen Herstellungsmaschine (124, 124', 124") zugewiesen ist.

11. Vorrichtung (110) zum Herstellen einer Vielzahl von optischen Linsen (112, 112', 112", 112"'), wobei die Vorrichtung (110) Folgendes umfasst:
- mindestens ein Transportelement (114, 114'), wobei das mindestens eine Transportelement (114, 114') ausgelegt ist zum:
d) Anliefern einer Vielzahl von optischen Linsen (112, 112', 112", 112"'), wobei jede optische Linse (112, 112', 112", 112"') eine Kennung aufweist, wobei jede optische Linse (112, 112', 112", 112‴) mindestens einem Herstellungsschritt unterzogen werden soll, der von der mindestens einen Herstellungsmaschine (124, 124', 124') durchgeführt wird, die ausgelegt ist zum Durchführen des mindestens einen Herstellungsschritts; und
- ein Herstellungsausführungssystem (120), wobei das Herstellungsausführungssystem (120) ausgelegt ist zum Durchführen der folgenden Verfahrensschritte:
a) Erzeugen von Datensätzen für eine Vielzahl von optischen Linsen (112, 112', 112", 112"'), wobei der Datensatz für mindestens eine spezielle optische Linse (112, 112', 112", 112‴) mindestens Folgendes umfasst:
- einen ersten Eintrag (216) von Informationen, betreffend die Kennung für die mindestens eine spezielle optische Linse (112, 112', 112", 112"'); und
- einen zweiten Eintrag (218) von Informationen, betreffend mindestens eines von:
∘ mindestens eine Herstellungsmaschine (124, 124', 124'), die aus ausgelegt ist zum Durchführen mindestens eines Herstellungsschritts an der mindestens einen speziellen optischen Linse (112, 112', 112", 112"'); oder
o wobei der mindestens eine Herstellungsschritt an der mindestens einen speziellen optischen Linse (112, 112', 112", 112"') unter Verwendung der mindestens einen Herstellungsmaschine (124, 124', 124') durchgeführt werden soll;
b) Liefern des Datensatzes für die mindestens eine spezielle optische Linse (112, 112', 112", 112‴), der von der mindestens einen Herstellungsmaschine (124, 124', 124') abgerufen werden soll, zum Herstellen der mindestens einen speziellen optischen Linse (112, 112', 112'', 112‴),
c) Übertragen des Datensatzes für jede optische Linse (112, 112', 112", 112"') an mindestens einen Server (130, 130', 130"), der ausgelegt ist zum Betreiben der mindestens einen Herstellungsmaschine (124, 124', 124'), die zum Durchführen des mindestens einen Herstellungsschritts vorgesehen ist;
e) Routen der Vielzahl der optischen Linsen (112, 112', 112", 112‴) zu der mindestens einen Herstellungsmaschine (124, 124', 124'), die zum Durchführen des mindestens einen Herstellungsschritts vorgesehen ist; und
- die mindestens eine Herstellungsmaschine (124, 124', 124'), die ausgelegt ist zum Durchführen des mindestens einen Herstellungsschritts beim Herstellen der Vielzahl der optischen Linsen (112, 112', 112", 112"'), wobei die mindestens eine Herstellungsmaschine (124, 124', 124') ausgelegt ist zum:
f) Auswählen der mindestens einen speziellen optischen Linse (112, 112', 112", 112"') aus der Vielzahl der optischen Linsen (112, 112', 112'', 112‴) unter Verwendung des ersten Eintrags (216) von Informationen;
g) Durchführen des mindestens einen Herstellungsschritts an der mindestens einen speziellen optischen Linse (112, 112', 112", 112‴) in Abhängigkeit von dem zweiten Eintrag (218) von Informationen unter Verwendung der mindestens einen Herstellungsmaschine (124, 124', 124');
- mindestens einen Server (130, 130', 130"), der ausgelegt ist zum Betreiben der mindestens einen Herstellungsmaschine (124, 124', 124'), die zum Durchführen des mindestens einen Herstellungsschritts vorgesehen ist, wobei das Herstellungsausführungssystem (120) ferner ausgelegt ist zum Speichern des Datensatzes für die mindestens eine spezielle optische Linse (112, 112', 112", 112"') in dem mindestens einen Server (130, 130', 130"), zumindest solange bis er durch die mindestens eine Herstellungsmaschine (124, 124', 124') angefordert wird, gemäß Verfahrensschritt b);
**dadurch gekennzeichnet,**
**dass** jeder Server (130, 130', 130") in einer speziellen Herstellungsmaschine (124, 124', 124") enthalten ist, wodurch dieser der speziellen Herstellungsmaschine (124, 124', 124") zugewiesen ist.

12. Vorrichtung nach dem vorhergehenden Anspruch, wobei jeder Server (130, 130', 130") einer speziellen Herstellungsmaschine (124, 124', 124') zugewiesen ist oder in einer solchen enthalten ist, zu deren Betrieb der Server (130, 130', 130") ausgelegt ist.

13. Vorrichtung nach einem der zwei vorhergehenden Ansprüche, ferner umfassend mindestens eines von:
- mindestens ein Transportelement, das ausgelegt ist zum Routen der Vielzahl der optischen Linsen (112, 112', 112", 112"'), gemäß Verfahrensschritt e), zu der mindestens einen Herstellungsmaschine (124, 124', 124'), die zum Durchführen des mindestens einen Herstellungsschritts vorgesehen ist; oder
- mindestens ein Sensorelement, das ausgelegt ist zum Melden, gemäß Verfahrensschritt h), mindestens eines Statuswerts, betreffend mindestens eine der Herstellungsmaschinen (124, 124', 124') oder den Herstellungsschritt.

14. Computerprogramm, umfassend ausführbare Anweisungen zum Durchführen mindestens eines Verfahrens nach einem der Ansprüche 1 bis 9 unter Verwendung einer Vorrichtung nach einem der Ansprüche 10 bis 13.

## Revendications

1. Procédé (230) destiné à fournir des ensembles de données pour une pluralité de lentilles optiques (112, 112', 112", 112‴) à au moins une machine de fabrication (124, 124', 124') configurée pour réaliser au moins une étape de fabrication lors de la fabrication de la pluralité de lentilles optiques (112, 112', 112", 112‴), le procédé (230) comprenant les étapes de procédé suivantes :
a) génération d'ensembles de données pour une pluralité de lentilles optiques (112, 112', 112", 112"'), l'ensemble de données pour au moins une lentille optique particulière (112, 112', 112", 112‴) comprenant au moins :
- un premier élément (216) d'information relatif à un identifiant de l'au moins une lentille optique particulière (112, 112', 112", 112"') ; et
- un deuxième élément (218) d'information relatif à au moins un des éléments suivants :
∘ au moins une machine de fabrication (124, 124', 124') configurée pour réaliser au moins une étape de fabrication au niveau de l'au moins une lentille optique particulière (112, 112', 112", 112"') ; ou
∘ l'au moins une étape de fabrication devant être réalisée au niveau de l'au moins une lentille optique particulière au moyen de l'au moins une machine de fabrication (124, 124', 124') ;
b) fourniture de l'ensemble de données pour l'au moins une lentille optique particulière (112, 112', 112", 112‴) devant être récupéré par l'au moins une machine de fabrication (124, 124', 124') afin de fabriquer l'au moins une lentille optique particulière (112, 112', 112", 112‴) ;
c) transmission de l'ensemble de données pour chaque lentille optique (112, 112', 112", 112"') à au moins un serveur (130, 130', 130") configuré pour faire fonctionner l'au moins une machine de fabrication (124, 124', 124') conçue pour réaliser l'au moins une étape de fabrication, l'ensemble de données pour l'au moins une lentille optique particulière (112, 112', 112", 112‴) étant stocké dans l'au moins un serveur (130, 130', 130") au moins jusqu'à ce qu'il soit demandé par l'au moins une machine de fabrication (124, 124', 124') selon l'étape de procédé b) ;
**caractérisé en ce que**
chaque serveur (130, 130', 130") est contenu dans une machine de fabrication particulière (124, 124', 124"), étant ainsi affecté à la machine de fabrication particulière (124, 124', 124").

2. Procédé (210) destiné à fabriquer une pluralité de lentilles optiques (112, 112', 112", 112"'), le procédé comprenant les étapes de procédé suivantes :
d) fourniture d'une pluralité de lentilles optiques (112, 112', 112", *112"'),* chaque lentille optique (112, 112', 112", 112‴) ayant un identifiant, chaque lentille optique (112, 112', 112", *112"')* étant censée subir au moins une étape de fabrication réalisée par au moins une machine de fabrication (124, 124', 124') configurée pour réaliser l'au moins une étape de fabrication ;
a) génération d'ensembles de données pour la pluralité de lentilles optiques (112, 112', 112", 112‴), l'ensemble de données pour au moins une lentille optique particulière (112, 112', 112", 112‴) comprenant au moins :
- un premier élément (216) d'information relatif à l'identifiant de l'au moins une lentille optique particulière (112, 112', 112", 112‴) ; et
- un deuxième élément (218) d'information relatif à au moins un des éléments suivants :
∘ l'au moins une machine de fabrication (124, 124', 124') configurée pour réaliser au moins une étape de fabrication au niveau de l'au moins une lentille optique particulière (112, 112', 112", 112‴) ; ou
∘ l'au moins une étape de fabrication devant être réalisée au niveau de l'au moins une lentille optique particulière (112, 112', 112", 112‴) au moyen de l'au moins une machine de fabrication (124, 124', 124') ;
b) fourniture de l'ensemble de données pour l'au moins une lentille optique particulière (112, 112', 112", 112‴) devant être récupéré par l'au moins une machine de fabrication (124, 124', 124') afin de fabriquer l'au moins une lentille optique particulière (112, 112', 112", 112‴) ;
c) transmission de l'ensemble de données pour chaque lentille optique (112, 112', 112", 112"') à au moins un serveur (130, 130', 130") configuré pour faire fonctionner l'au moins une machine de fabrication (124, 124', 124') conçue pour réaliser l'au moins une étape de fabrication, l'ensemble de données pour l'au moins une lentille optique particulière (112, 112', 112", 112"') étant stocké dans l'au moins un serveur (130, 130', 130") au moins jusqu'à ce qu'il soit demandé par l'au moins une machine de fabrication (124, 124', 124') selon l'étape de procédé b) ;
e) acheminement de la pluralité des lentilles optiques (112, 112', 112", 112‴) jusqu'à l'au moins une machine de fabrication (124, 124', 124') conçue pour réaliser l'au moins une étape de fabrication ;
f) sélection de l'au moins une lentille optique particulière (112, 112', 112", 112‴) parmi la pluralité de lentilles optiques (112, 112', 112", 112‴) au moyen du premier élément (216) d'information ;
g) réalisation de l'au moins une étape de fabrication au niveau de l'au moins une lentille optique particulière (112, 112', 112", 112‴) en fonction du deuxième élément (218) d'information au moyen de l'au moins une machine de fabrication (124, 124', 124') ;
**caractérisé en ce que**
chaque serveur (130, 130', 130") est contenu dans une machine de fabrication particulière (124, 124', 124"), étant ainsi affecté à la machine de fabrication particulière (124, 124', 124").

3. Procédé (210, 230) selon l'une quelconque des revendications précédentes, dans lequel chaque élément (216, 218) d'information comprenant une pluralité de variables est transmis sous la forme de variables individuelles sérialisées.

4. Procédé (210, 230) selon l'une quelconque des revendications précédentes, dans lequel la transmission de l'ensemble de données pour chaque lentille optique (112, 112', 112", 112‴) selon l'étape de procédé c) à l'au moins un serveur (130, 130', 130") est réalisée avant la récupération de l'ensemble de données pour l'au moins une lentille optique particulière (112, 112', 112", 112‴) par l'au moins une machine de fabrication (124, 124', 124') afin de fabriquer l'au moins une lentille optique particulière (112, 112', 112", 112‴) selon l'étape de procédé b).

5. Procédé (210, 230) selon l'une quelconque des revendications précédentes, dans lequel l'au moins une machine de fabrication (124, 124', 124') récupère l'ensemble de données pour l'au moins une lentille optique particulière (112, 112', 112", 112‴) auprès de l'au moins un serveur (130, 130', 130") configuré pour faire fonctionner l'au moins une machine de fabrication (124, 124', 124') selon l'étape de procédé b) avant la réalisation de l'au moins une étape de fabrication selon l'étape de procédé g) au niveau de l'au moins une lentille optique particulière (112, 112', 112", 112‴).

6. Procédé (210, 230) selon l'une quelconque des revendications précédentes, dans lequel l'au moins un serveur (130, 130', 130") comprend une mémoire cache (132, 132', 132"), la mémoire cache (132, 132', 132") étant configurée pour stocker un nombre prédéfini d'ensembles de données.

7. Procédé (210, 230) selon la revendication précédente, dans lequel un premier ensemble de données d'abord stocké dans la mémoire cache (132, 132', 132") est écrasé par un autre ensemble de données si l'autre ensemble de données est transmis au serveur (130, 130', 130") alors que la mémoire cache (132, 132', 132") comprend déjà le nombre prédéfini d'ensembles de données.

8. Procédé (210, 230) selon l'une quelconque des revendications précédentes, dans lequel l'acheminement de la pluralité de lentilles optiques (112, 112', 112", 112‴) selon l'étape de procédé e) jusqu'à l'au moins une machine de fabrication (124, 124', 124') est réalisé de manière automatique ou de manière manuelle.

9. Procédé (210, 230) selon l'une quelconque des revendications précédentes, comprenant en outre l'étape de procédé suivante :
h) signalement d'au moins une valeur d'état relative à la machine de fabrication (124, 124', 124') et/ou à l'étape de fabrication.

10. Dispositif destiné à fournir des ensembles de données pour une pluralité de lentilles optiques (112, 112', 112", 112‴) à au moins une machine de fabrication (124, 124', 124') configurée pour réaliser au moins une étape de fabrication lors de la fabrication de la pluralité de lentilles optiques (112, 112', 112", 112‴), le dispositif comprenant un système d'exécution de fabrication (120), le système d'exécution de fabrication (120) étant configuré pour :
a) génération d'ensembles de données pour une pluralité de lentilles optiques (112, 112', 112", 112‴), l'ensemble de données pour au moins une lentille optique particulière (112, 112', 112", 112‴) comprenant au moins :
- un premier élément (216) d'information relatif à un identifiant de l'au moins une lentille optique particulière (112, 112', 112", 112‴) ; et
- un deuxième élément (218) d'information relatif à au moins un des éléments suivants :
∘ au moins une machine de fabrication (124, 124', 124') configurée pour réaliser au moins une étape de fabrication au niveau de l'au moins une lentille optique particulière (112, 112', 112", 112"') ; ou
∘ l'au moins une étape de fabrication devant être réalisée au niveau de l'au moins une lentille optique particulière (112, 112', 112", 112‴) au moyen de l'au moins une machine de fabrication (124, 124', 124') ;
b) fourniture de l'ensemble de données pour l'au moins une lentille optique particulière (112, 112', 112", 112‴) devant être récupéré par l'au moins une machine de fabrication (124, 124', 124') afin de fabriquer l'au moins une lentille optique particulière (112, 112', 112", 112‴) ;
c) transmettre l'ensemble de données pour chaque lentille optique (112, 112', 112", 112"') à au moins un serveur (130, 130', 130") configuré pour faire fonctionner l'au moins une machine de fabrication (124, 124', 124') conçue pour réaliser l'au moins une étape de fabrication, le système d'exécution de fabrication (120) étant en outre configuré pour stocker l'ensemble de données pour l'au moins une lentille optique particulière (112, 112', 112", 112‴) dans l'au moins un serveur (130, 130', 130") au moins jusqu'à ce qu'il soit demandé par l'au moins une machine de fabrication (124, 124', 124') selon l'étape de procédé b) ;
**caractérisé en ce que**
chaque serveur (130, 130', 130") est contenu dans une machine de fabrication particulière (124, 124', 124"), étant ainsi affecté à la machine de fabrication particulière (124, 124', 124").

11. Dispositif (110) destiné à fabriquer une pluralité de lentilles optiques (112, 112', 112", 112‴), le dispositif (110) comprenant :
- au moins un élément de transport (114, 114'), l'au moins un élément de transport (114, 114') étant configuré pour :
d) fournir une pluralité de lentilles optiques (112, 112', 112", 112‴), chaque lentille optique (112, 112', 112", 112‴) ayant un identifiant, chaque lentille optique (112, 112', 112", 112‴) étant censée subir au moins une étape de fabrication réalisée par au moins une machine de fabrication (124, 124', 124') configurée pour réaliser l'au moins une étape de fabrication ; et
- un système d'exécution de fabrication (120), le système d'exécution de fabrication (120) étant configuré pour réaliser les étapes de procédé suivantes :
a) génération d'ensembles de données pour une pluralité de lentilles optiques (112, 112', 112", 112"'), l'ensemble de données pour au moins une lentille optique particulière (112, 112', 112", 112‴) comprenant au moins :
- un premier élément (216) d'information relatif à l'identifiant de l'au moins une lentille optique particulière (112, 112', 112", 112"') ; et
- un deuxième élément (218) d'information relatif à au moins un des éléments suivants :
∘ au moins une machine de fabrication (124, 124', 124') configurée pour réaliser au moins une étape de fabrication au niveau de l'au moins une lentille optique particulière (112, 112', 112", 112"') ; ou
∘ l'au moins une étape de fabrication devant être réalisée au niveau de l'au moins une lentille optique particulière (112, 112', 112", 112‴) au moyen de l'au moins une machine de fabrication (124, 124', 124') ;
b) fourniture de l'ensemble de données pour l'au moins une lentille optique particulière (112, 112', 112", 112‴) devant être récupéré par l'au moins une machine de fabrication (124, 124', 124') afin de fabriquer l'au moins une lentille optique particulière (112, 112', 112", 112‴) ;
c) transmission de l'ensemble de données pour chaque lentille optique (112, 112', 112", 112"') à au moins un serveur (130, 130', 130") configuré pour faire fonctionner l'au moins une machine de fabrication (124, 124', 124') conçue pour réaliser l'au moins une étape de fabrication ;
e) acheminement de la pluralité des lentilles optiques (112, 112', 112", 112‴) jusqu'à l'au moins une machine de fabrication (124, 124', 124') conçue pour réaliser l'au moins une étape de fabrication ; et
- au moins une machine de fabrication (124, 124', 124') conçue pour réaliser l'au moins une étape de fabrication lors de la fabrication de la pluralité des lentilles optiques (112, 112', 112", 112"'), l'au moins une machine de fabrication (124, 124', 124') étant configurée pour :
f) sélection de l'au moins une lentille optique particulière (112, 112', 112", 112‴) parmi la pluralité de lentilles optiques (112, 112', 112", 112‴) au moyen du premier élément (216) d'information ;
g) réalisation de l'au moins une étape de fabrication au niveau de l'au moins une lentille optique particulière (112, 112', 112", 112‴) en fonction du deuxième élément (218) d'information au moyen de l'au moins une machine de fabrication (124, 124', 124') ;
- au moins un serveur (130, 130', 130") configuré pour faire fonctionner l'au moins une machine de fabrication (124, 124', 124') conçue pour réaliser l'au moins une étape de fabrication, le système d'exécution de fabrication (120) étant en outre configuré pour stocker l'ensemble de données pour l'au moins une lentille optique particulière (112, 112', 112", 112‴) dans l'au moins un serveur (130, 130', 130") au moins jusqu'à ce qu'il soit demandé par l'au moins une machine de fabrication (124, 124', 124') selon l'étape de procédé b) ;
**caractérisé en ce que**
chaque serveur (130, 130', 130") est contenu dans une machine de fabrication particulière (124, 124', 124"), étant ainsi affecté à la machine de fabrication particulière (124, 124', 124").

12. Dispositif selon la revendication précédente, dans lequel chaque serveur (130, 130', 130") est affecté à ou contenu dans une machine de fabrication particulière (124, 124', 124') que le serveur (130, 130', 130") est configuré pour faire fonctionner.

13. Dispositif selon l'une quelconque des deux revendications précédentes, comprenant en outre au moins un des éléments suivants :
- au moins un élément de transport configuré pour acheminer l'au moins une lentille optique (112, 112', *112",* 112‴) selon l'étape de procédé e) jusqu'à l'au moins une machine de fabrication (124, 124', 124') conçue pour réaliser l'au moins une étape de fabrication ; ou
- au moins un élément de détection configuré pour signaler selon l'étape de procédé h) au moins une valeur d'état relative à la machine de fabrication (124, 124', 124') et/ou à l'étape de fabrication.

14. Programme informatique comprenant des instructions exécutables destinées à réaliser au moins une étape de procédé selon l'une quelconque des revendications 1 à 9 au moyen d'un dispositif selon l'une quelconque des revendications 10 à 13.
